# EUROPEAN PATENT SPECIFICATION

(11) **EP 2 591 045 B1**
(45) Date of publication and mention of the grant of the patent: **01.04.2015**
(21) Application number: 11741145.4
(22) Date of filing: 08.07.2011
(51) Int. Cl.: C08K 5/00, C08K 13/02, C08L 27/06, C08K 5/42, C08K 5/17, C08K 3/16

(54) **STABILIZING COMPOSITION FOR HALOGEN-CONTAINING POLYMERS**
STABILISATORZUSAMMENSETZUNG FÜR HALOGEN-ENTHALTENDE POLYMEREN
COMPOSITION STABILISANTE POUR DES POLYMÈRES HALOGÉNÉS

(30) Priority: 08.07.2010 EP 10425232
(43) Date of publication of application: 15.05.2013
(73) Proprietor: Reagens S.p.A., 40016 S. Giorgio Di Piano (IT)
(72) Inventor: BERNA, Mario, I-40137 Bologna (IT); DIBONA, Lisa, I-40018 S. Pietro In Casale (IT); GARDI, Stefano, I-40121 Bologna (IT); BOLOGNESI, Monica, I-40051 Altedo (IT)
(74) Representative: Cattaneo, Elisabetta
(86) International application number: PCT/EP2011/061594
(87) International publication number: WO 2012/004377

(56) References cited:
- WO-A1-2006/136191
- WO-A1-2009/135813
- WO-A2-02/48249
- US-A- 4 619 960

## Description

### FIELD OF THE INVENTION

The invention relates to a composition for stabilizing halogen-containing polymers, in particular polyvinyl chloride (PVC), and to halogenated resins in rigid and plasticized formulations comprising said stabilizing compositions.

### STATE OF THE ART

Halogen-containing polymers are known to be processed at high temperatures to produce final articles of interest. The temperatures involved, however, can generate a dehydrochlorination reaction giving rise to polymer degradation, which is noticeable from a change in the colour and from a loss of the physical and chemical properties of said polymer.

It is therefore of fundamental importance to stabilize halogen-containing polymers such as PVC.

For this purpose, product mixtures containing primary stabilizers are known, i.e. substances able to slow down or block the dehydrochlorination reaction, as are secondary stabilizers, i.e. substances acting as hydrochloric acid scavengers once the degradation process has begun.

Primary stabilizers include metal soaps and organometallic compounds (Plastic Additives Handbook, R.Gächter and H.Müller, Carl Hanser Verlag, 5th Edition, 2001, pages 442-456). Metal-containing thermal stabilizers include compounds wherein the metal is lithium, sodium, potassium, magnesium, calcium, strontium, cadmium, barium, manganese, aluminium, tin, lead, bismuth or antimony. Apart from these components, the stabilizer is generally completed with various different additives which, although on the one hand give an improvement in performance, on the other hand often have undesired effects due to their toxicological characteristics or possible release of volatiles over time. Interest is very high therefore in new stabilizers which are capable to confer the desired heat stability characteristics over time without having a strong environmental impact.

EP 1 343 838 describes a stabilizing system for halogen-containing polymers comprising alkanolamines of the formula 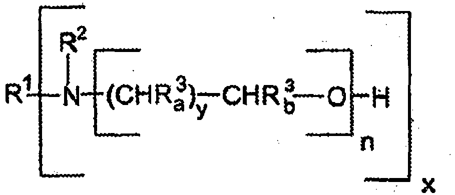 and perchlorate. The amine and perchlorate combination is proposed for stabilizing polyvinylchloride.

Diamine compounds have found little application in the polymer field.

Variously ethoxylated diamines have been described in WO 94/15983 and used in polyurethane resins as adhesion agents in moulds to facilitate release therefrom. In US 2,956,031 diamines are used to obtain a highly cross-linked polyurethane or, in US 4,632,943, to increase polymer flowability.

These substances have so far found limited application even in polyolefins: EP 1 539 873 refers to their use as anti-static agent in polyolefins though their use in other polymer materials, including polyvinyl chloride, is also described.

With regard to polyolefins in the field of thermoplastics generally, WO 2009/135813 states, in contrast to EP 1 539 873, that a particular diamine of the described class would produce degradative effects in the polymer.

The object of the present invention is therefore to stabilize halogen-containing polymers, while avoiding degradative effects originating from the treated polymer itself. A further object of the present invention is hence to improve thermal stability effectiveness during the processing of halogen-containing polymers, thus avoiding degradation during processing and so conferring colour fastness on the final product for as long as possible.

A further object of the present invention is to provide thermal stability to halogen-containing polymers in those fields of application which employ polymers in plasticized formulations, thus reducing costs in respect of known formulations.

### SUMMARY OF THE INVENTION

The above objects have been achieved by means of a composition for stabilizing halogen-containing polymers comprising:
a) at least one diamine of formula I 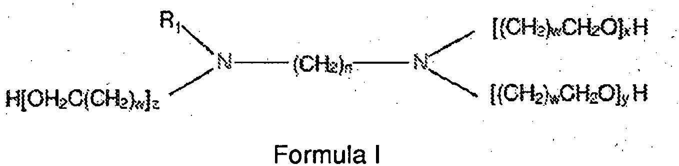 wherein
   n is an integer from 3 to 4,
   x, y, z are independently of each other an integer from 1 to 20,
   w is an integer from 1 to 2,
   R¹ is a C₈-C₂₀ hydrocarbon residue of a compound selected from the group consisting of tallow, cottonseed oil, soya bean oil, and coconut oil; and
b) at least one compound selected from the group consisting of M(ClO₄)ₖ and (CF₃SO₃)ₙM, wherein M is H⁺, Li⁺, Na⁺, K⁺, Mg²⁺, Ca²⁺, Ba²⁺, Zn²⁺, A,³⁺ or NH₄⁺, and k and n are 1, 2 or 3 depending on the valency of M.

In another aspect, the invention concerns a halogenated resin in rigid formulation comprising a halogen-containing polymer and the above stabilizer composition.

In a further aspect, the invention concerns a halogenated resin in plasticized or semi-rigid formulation comprising a halogen-containing polymer and the above stabilizer composition.

In a preferred embodiment, the invention relates to a halogenated resin in plasticized formulation comprising polyvinyl chloride (PVC) and the above stabilizer composition.

### DETAILED DESCRIPTION OF THE INVENTION

The invention therefore concerns a composition for stabilizing halogen-containing polymers comprising:
a) at least one diamine of formula I 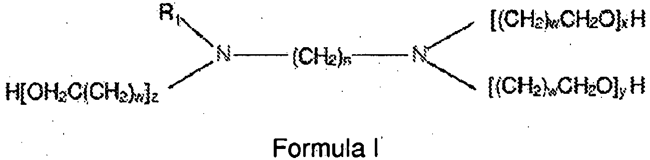 wherein
   n is an integer from 3 to 4,
   x, y, z are independently of each other an integer from 1 to 20,
   w is an integer from 1 to 2,
   R¹ is a C₈-C₂₀ hydrocarbon residue of a compound selected from the group consisting of tallow, cottonseed oil, soya bean oil, and coconut oil; and
b) at least one compound selected from the group consisting of M(ClO₄)ₖ and (CF₃SO₃)ₙM, wherein M is H⁺, Li⁺, Na⁺, K⁺, Mg²⁺, Ca²⁺, Ba²⁺, Zn²⁺, Al³⁺ or NH₄⁺, and k and n are 1, 2 or 3 depending on the valency of M.

In the present invention, the term:
- "R¹ is a C₈-C₂₀ hydrocarbon residue of a compound chosen from the group consisting of tallow, cottonseed oil, soya bean oil, coconut oil" means a fat/oil type compound derived from tallow, cottonseed oil, soya bean oil or coconut oil, having within its structure one unsaturated aliphatic hydrocarbon residue or a mixture thereof, having from 8 to 20 carbon atoms.
- "halogen-containing polymer" means vinyl chloride polymers, including homopolymers, chlorinated polyvinyl chloride (C-PVC), copolymers of vinyl chloride with ethylene-type unsaturated compounds, PVC-VA (vinyl acetate) copolymers, PVC-acrylate, polymer mixtures of polyvinyl chloride with ethyl-vinyl acetate (EVA), acrylic butadiene-styrene (ABS), methacrylate-butadiene-styrene (MBS), acrylonitrile butadiene (NBR), styrene-acrylonitrile (SAN), chlorinated polyethylene (CPE), polyalkylacrylate (PAA), polyalkylmethacrylate (PAMA), polyamides, polylactones;
- "halogenated resin in plasticized formulation" means a halogen-containing polymer formulation with added plasticizer compounds.

Preferably, R¹ is a C₈-C₂₀ hydrocarbon residue of tallow or coconut oil, more preferably R¹ is a C₁₂-C₁₈ alkyl residue, and even more preferably a mixture of C₁₂, C₁₄, C₁₆, C₁₈ alkyl residues from tallow or coconut oil. The R₁ group is yet more preferably selected from the group consisting of coco-alkyl and tallow-alkyl.

The diamine a) of the invention advantageously is N,N',N'-tris(3-hydroxypropyl)-N-coco-alkyl-1,3-propanediamine, N,N,N'-tris(2-hydroxyethyl)-N'-C₁₂₋₁₈-alkyl-1,3-propanediamine, N,N',N'-tris-(2-hydroxyethyl)-N-tallow-alkyl-1,3-propanediamine, N,N',N'-polyoxyethylene(15)-N-tallow-alkyl-1,3-propanediamine, or N,N',N'-tris(2-hydroxyethyl)-N-coco-alkyl-1,3-propanediamine.

Preferably, the weight ratio between the diamine a) and compound b) is of 65:35 to 98:2, more preferably the weight ratio is of 70:30 to 95:5. In a preferred embodiment, the weight ratio between the diamine a) and compound b) is of about 80:20.

According to the invention, the stabilizer composition also comprises a compound b) selected from the group consisting of M(ClO₄)ₖ and (CF₃SO₃)ₙM, wherein M is H⁺, Li⁺, Na⁺, K⁺, Mg²⁺, Ca²⁺, Ba²⁺, Zn²⁺, Al³⁺or NH₄⁺ and k and n are 1, 2 or 3 depending on the valency of M.

Preferably, M is Li⁺, Na⁺, K⁺, Mg²⁺, Ca²⁺ or Zn²⁺, more preferably M is Na⁺, K⁺ or Ca²⁺. In a preferred embodiment, M is Na⁺.

The composition of the invention can comprise M(ClO₄)ₖ or (CF₃SO₃)ₙM or both.

In a preferred embodiment, the composition comprises M(ClO₄)ₖ. More preferably, M is H⁺, Li⁺, Na⁺, K⁺, Mg²⁺, Ca²⁺ or Zn²⁺, and even more preferably M is Na⁺.

M(ClO₄)ₖ, preferred for the purposes of the invention, can be used in various forms, for example as salts or aqueous or organic solutions, supported on various materials such as PVC, calcium silicate, zeolites or hydrotalcites or bound to a hydrotalcite by chemical reaction.

Furthermore, the preferred M(ClO₄)ₖ are complexes of metal perchlorate, more preferably sodium perchlorate, with triethylene glycol, butyl diglycol, tripropylene glycol or polyethylene glycol.

Alternatively, the stabilizer composition of the invention can comprise (CF₃SO₃)ₙM as the compound b). Advantageously, (CF₃SO₃)ₙM is trifluoromethanesulphonic acid or a sodium salt thereof, and is more preferably sodium trifluoromethanesulphonate.

The composition of the invention can also comprise one or more conventional stabilizers and co-stabilizers, selected from the group consisting of metal soaps, organotin compounds, antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

The composition of the invention preferably comprises one or more stabilizers. Preferably the stabilizers contained in the composition of the invention are combinations of metal soaps and/or organotin compounds, polyols, antioxidants, organic stabilizers, etc.

The following can be mentioned as non-limiting examples of stabilizers:

### Metal soaps

All metal soaps used as stabilizers of polyvinyl chloride (PVC) are suitable for the invention. These are preferably organic sodium, lithium, potassium, calcium, zinc, magnesium, aluminium salts of saturated C₁-C₂₂ aliphatic carboxylates, unsaturated C₃-C₂₂ aliphatic carboxylates, saturated C₂-C₂₂ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates, either unsubstituted or substituted with at least one OH group and/or substituted with C₁-C₁₆ alkyl, naphthylcarboxylates, either unsubstituted or substituted with at least one OH group and/or substituted with C₁-C₁₆alkyl, phenyl (C₁-C₁₆) alkylcarboxylates, naphthyl (C₁-C₁₆) alkylcarboxylates, or phenolates, either unsubstituted or substituted with C₁-C₁₂ alkyl.

Among those, the following can be cited: metal salts of monovalent carboxylic acids such as formic acid, acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic, acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane-1,10-dicarboxylic acid, lactic acid, malonic acid, maleic acid, tartaric acid, phthalic acid, isophthalic acid, terephthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP3275570; and colophonic acids (rosin acids such as abietic acid), and superbasic carboxylates.

Preferred metal soaps for the purposes of the present invention are metal carboxylates of a carboxylic acid containing from 1 to 25 carbon atoms, being typically benzoates, or alkanoates, and preferably C8-alkanoates, stearates, oleates, laurates, palmitates, behenates, versatates, hydroxystearates, dihydroxystearates, p-tert-butylbenzoates, formates, adipates and 2-ethylhexanoates.

According to the invention, a mixture of carboxylates of different structure can also be employed as metal soaps. Preference is given to the compositions as aforedescribed comprising a zinc and/or calcium and/or sodium soap.

Zn, Li, K, Mg, Ca, Na salts of the aforementioned fatty acids containing from 7 to 25 carbon atoms are preferably added to the composition of the invention.

The aforedescribed metal soaps or metal soap mixture can be present in the composition preferably in an amount within the range from 0.05 to 3 parts by weight, more preferably from 0.1 to 1.0 parts by weight, per 100 parts by weight of polymer.

### Organotin compounds

Organotin compounds are a particularly well known and extensively utilized class of metal-containing thermal stabilizers for halogenated vinyl polymers. This class comprises compounds containing one or more tetravalent tin atoms, each of which has at least one direct tin-carbon bond. A preferred class of tin-containing thermal stabilizers presents one or more tetravalent tin atoms, each of which has at least one direct tin-oxygen or tin-sulphur bond, i.e. containing the group:

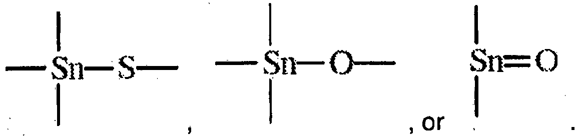

The preferred organotin compounds in the invention comprise those containing one or more tetravalent tin atoms having at least one direct tin-carbon bond and wherein the remaining valencies are satisfied by bonds with oxygen or sulphur, as in the case of a residue resulting from the removal of a hydrogen bound to the sulphur of a mercaptan, mercaptoalcohol, mercaptoacid or mercaptoalcohol ester or as in the case of a residue resulting from the removal of a hydrogen bound to the oxygen of a carboxylic acid or alcohol or halogen acid, on condition that at least one valency is satisfied by a bond with oxygen or sulphur or a mixture of the two. Examples of compounds of this type are: alkyl tin mercaptides, the product of reacting organotin halide with an alkali metal sulphide and mercaptide, mercaptoacid ester, mercaptoalcohol, mercaptoalcohol ester or mixtures thereof. Another class of tin-containing stabilizers included in the present invention is that of non-sulphur-containing compounds wherein the tin is bound to oxygen. This group includes, by way of non-limiting example, dibutyltin maleate, dibutyltin di(stearyl maleate), dioctyltin maleate, organotin carboxylates or organotin alkoxides.

The stabilizer composition of the present invention can comprise organotin compounds preferably in an amount within the range from 0.1 to 4 parts by weight, more preferably from 0.15 to 2.0 parts by weight, per 100 parts by weight of polymer.

### Non-metal stabilizers

Metal-free stabilizers include esters of β-aminocrotonic acid.

Among these compounds the following are considered: β-aminocrotonic acid stearyl ester, 1,4 butanediol di(β-aminocrotonic acid) ester, thio-diethanol-β-aminocrotonic acid ester.

The composition of the invention can also comprise other additives able to behave as co-stabilizers, chosen from the group consisting of antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

### Antioxidants

The organic antioxidants used in the present invention are chosen from those already known as additives for plastic materials. Preferred for the purposes of the invention are one or more antioxidants chosen from the group consisting of alkylidene-bisphenols, esters of β-(3,5-di-tert-butyl-4-hydroxyphenyl)propionic acid with mono- or poly-alcohols, esters of β-(5-tert-butyl-4-hydroxy-3-methylphenyl)propionic acid with mono- or poly-alcohols, esters of β-(3,5-. dicyclohexyl-4-hydroxyphenyl)propionic acid with mono- or poly-alcohols. There follow some examples of antioxidant classes preferred in the invention:
1. Alkylidene-bisphenols: 4,4'-isopropylidenediphenol, 2,2'-methylene-bis(6-tert-butyl-4-methylphenol), 2,2'-methylene-bis(6-tert-butyl-4-ethylphenol), 2,2'-methylene-bis[4-methyl-6-(α-methylcyclohexyl)phenol], 2,2'-methylene-bis(4-methyl-6-cyclohexylphenol), 2,2'-methylene-bis(6-nonyl-4-methylphenol), 2,2'-methylene-bis(4,6-di-tert-butylphenol), 2,2'-ethylidene-bis(4,6-di-tert-butylphenol), 2,2'-ethylidene-bis(6-tert-butyl-4-isobutylphenol), 2,2'-methylene-bis[6-(α-methylbenzyl)-4-nonylphenol], 2,2'-methylene-bis[6-(α,α-dimethylbenzyl)-4-nonylphenol], 4,4'-methylene-bis(2,6-di-tert-butylphenol), 4,4'-methylene-bis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tri(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methyl-phehyl]terephthalate, 1,1-bis(3,5-dimethyl-2-hydroxyphenyl)butane, 2,2-bis(3,5-di-tert-butyl-4-hydroxyphenyl)propane, 2,2-bis(4-hydroxyphenyl)propane, 2,2-bis(5-tert-butyl-4-hydroxy-2-methylphenyl)-4-n-dodecylmercaptobutane, 1,1,5,5-tetra-(5-tert-butyl-4-hydroxy-2-methylphenyl)pentane.
2. Esters of β-(3,5-di-tert-butyl-4-hydroxyphenyypropionic acid with mono or poly alcohols such as methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thioundecanol, 3-thiopentadecanol, trimethylhexanediol, trimethylolpropane, ditrimethylolpropane, 4-hydroxymethyl-1-phospha-2,6,7-trioxabicyclo-[2.2.2]-octane.
3. Esters of β-(5-tert-butyl-4-hydroxy-3-methylphenyl)propionic acid with mono- or poly-alcohols, such as methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thioundecanol, 3-thiopentadecanol, trimethylhexanediol, trimethylolpropane, 4-hydroxymethyl-1-phospha-2,6,7-trioxabicyclo-[2.2.2]-octane.
4. Esters of β-(3,5-dicyclohexyl-4-hydroxyphenyl)propionic acid with mono- or poly-alcohols such as methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thioundecanol, trimethylolpropane, 4-hydroxymethyl-1-phospha-2,6,7-trioxabicyclo-[2.2.2]-octane. Particularly preferred according to the invention are 2,2'-methylene-bis(6-tert-butyl-4-methylphenol), commercially available as Lowinox® 22 M46 produced by Great Lakes Chem. Corp., and esters of β-(3,5-di-tert-butyl-4-hydroxyphenyl)propionic acid with octadecanol and with pentaerythritol, respectively Arenox® A76 and Arenox® A10, produced by Reagens, and bisphenol A.

The aforedescribed antioxidants, if present, are comprised preferably in an amount within the range from 0.01 to 1.0 parts by weight, more preferably from 0.1 to 0.5 parts by weight, per 100 parts by weight of polymer.

### Organic co-stabilizers

The invention also envisages the optional presence of organic co-stabilizers in the composition of the invention to further increase the effectiveness of the stabilizer composition. The organic co-stabilizers optionally present in the stabilizer composition of the invention are preferably one or more compounds chosen from: 1) β-diketonic compounds, 2) dihydropyridines or polydihydropyridines, 3) uracil derivatives.

*1. β-Diketonic compounds:* The 1,3-dicarbonyl compounds advantageously present in the composition of the invention are linear or cyclic dicarbonyl compounds. Among these, preferred are dicarbonyl compounds of the formula: 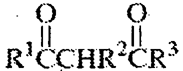 wherein
R¹ is C₁-C₂₂ alkyl, C₅ -C₁₀ hydroxyalkyl, C₃-C₇ alkenyl, phenyl, phenyl substituted with OH, C₁-C₄ alkyl or with C₁-C₄ halogenalkyl, C₇-C₁₀ phenylalkyl, C₅ -C₁₂ cycloalkyl, C₅-C₁₂ cycloalkyl substituted with C₁-C₄ alkyl.
R² is hydrogen, C₁-C₈ alkyl, C₃-C₇ alkenyl, C₂-C₁₂ phenyl C₇-C₁₂ alkylphenyl, C₇-C₁₀ phenylalkyl,
R³ has the same meaning as given to R¹.

Particularly preferred are dibenzoylmethane, stearoylbenzoylmethane and dehydroacetic acid.

### 2. Dihydropyridines (DHP)

Preferred monomeric dihydropyridine derivatives according to the invention include carboxylic acids esters the formula of which can be generally indicated by: 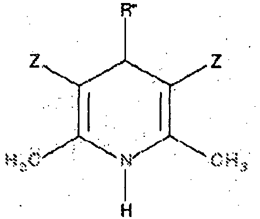 wherein Z is CO₂C₂H₅, CO₂(n-C₁₂H₂₅), R" is hydrogen, C₁-C₁₈ alkyl, C₂-C₁₈ alkoxycarbonyl or C₆ -C₁₀ aryl. Particularly preferred are 3-bisdodecyloxycarbonyl-2,6-dimethyl-1,4-dihydropyridine, commercially available as Stavinor® D507 and produced by Atochem.

### 3. Uracil derivatives

The uracil derivatives advantageously present in the composition of the invention are described by the following general formula: 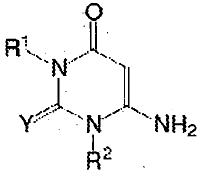 wherein
R¹ and R² are, each independently of the other, hydrogen, C₁-C₁₂ alkyl, C₃-C₆ alkenyl, C₅-C₈ cycloalkyl optionally substituted with from 1 to 3 C₁-C₄ alkyl, C₁-C₄ alkoxy, C₅-C₈ cycloalkyl or hydroxyl or with chlorine atoms, or C₇-C₉ phenylalkyl optionally substituted on the phenol ring with from 1 to 3 C₁-C₄ alkyl, C₁-C₄ alkoxy, C₅-C₈ cycloalkyl or hydroxyl or with chlorine atoms; Y can be oxygen or sulphur. Examples of C₁-C₄ alkyl are methyl, ethyl, n-propyl, isopropyl, n-, iso-, sec-, or tert-butyl.

Examples of C₁-C₁₂ alkyl are, in addition to the aforementioned radicals, pentyl, hexyl, heptyl, octyl, 2-ethylhexyl, isooctyl, nonyl, decyl, undecyl, dodecyl. Examples of C₁-C₄ alkoxy are methoxy, ethoxy, propoxy, isopropoxy, butoxy, isobutoxy.

Examples of C₅-C₈ cycloalkyl are cyclopentyl, cyclohexyl, cycloheptyl, cyclooctyl.

Examples of C₇-C₉ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted with one or two substituents, preferably chosen from chlorine, hydroxyl, methyl or methoxy.

Examples of C₃-C₆ alkenyl are allyl, methallyl, 1-butenyl, or 1-hexanyl, preferably allyl.

Preferred are the compounds of the aforestated formula, wherein R¹ and R² are, each independently of the other, C₁-C₄ alkyl and hydrogen; in particular, the compound wherein R¹ and R² are methyl is preferred.

The aforementioned uracil derivatives can be preferably present in amounts within the range from 0.01 to 1.0 parts by weight, and in particular from 0.1 to 0.5 parts by weight per 100 parts by weight of polymer.

### Hydrotalcites

The hydrotalcites optionally present in the compositions of the invention can be described by the general formula:

[M²⁺₁₋ₓM³⁺ₓ(OH)₂]^{x+}[Aⁿ⁻_{x/n}mH₂O]^{x-}

wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions 0.2<x≦ 0.33
m>0

In the general formula above, Aⁿ⁻ represents an anion chosen from the group consisting of CO₃²⁻, OH⁻, HCO₃⁻, ClO₄⁻, an acetate ion(-), a salicylate ion(-), a tartrate ion(2-),

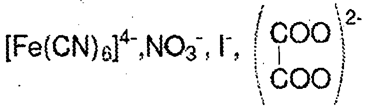

The preferred hydrotalcites of the invention are those wherein Aⁿ⁻ is chosen from CO₃²⁻, OH⁻.

The preferred empirical formulas for natural and certain synthetic hydrotalcites considered to be preferred for the invention are:

Mg₆Al₂(OH)₁₆CO₃.4H₂O Mg_{4.5}Al₂(OH)₁₃CO₃.3.5H₂O

Mg₄Al₂(OH)₁₂CO₃.2,85H₂O Mg_{4,35}Al₂(OH)_{11,36}(CO₃)_{1,67}.mH₂O

The aforedescribed hydrotalcites can be present in the composition of the invention preferably in an amount from 0.1 to 3 parts by weight, in particular from 0.2 to 1 parts by weight, per 100 parts by weight of PVC.

### Zeolites

The zeolites optionally present in the compositions of the invention can be described by the general formula:

M q/a [(AlO₂)q (SiO₂)r] ·w₂O

wherein a is the charge on the cation M,
M is an element of the alkali group or alkaline-earth metal group, in particular Na, K, Mg,
q is a number greater than or equal to 2,
the q/r ratio is a number greater than or equal to 0.4, being preferably a number between 0.4 and 10.5, and w is a number between 0 and 300.

The preferred zeolites, optionally present in the composition of the invention, are described in "Atlas of Zeolite Structure Types", W. M. Meier and D. H. Olson, Butterworths, 3rd Edition, 1992.

Particularly preferred are those zeolites having a particle size mostly within the range from 0.5 to 10 micron.

The preferred zeolites, which are known *per se,* have an effective mean cavity diameter of 3-5 A and can be prepared by known methods.

Also particularly preferred are zeolites of type NaA, which have an effective mean cavity diameter of 4 A, and are hence known as 4A zeolites, indicated by the formula:

Na₁₂ Al₁₂ Si₁₂ O₄₈·27H₂O

Particular preference is given to those zeolites falling within the aforestated general formula, known as X zeolites and indicated by the formula (Na2, Ca, Mg)₂₉ Al₅₈ Si₁₃₄ O₃₈₄·240H₂O

The zeolites optionally present in the composition of the invention are preferably in an amount from 0.1 to 3 parts by weight, more preferably from 0.2 to 1 parts by weight, per 100 parts by weight of polymer.

### Polyols

Of the polyols, optionally present in the composition of the invention, the following are preferred:
pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate.

Most preferred among these compounds are tris(hydroxyethyl)isocyanurate (THEIC), pentaerythritol, dipentaerythritol, trimethylolpropane, bistrimethylolpropane, sorbitol. The polyols, if present, are present preferably in an amount within the range from 0.01 to 2 parts by weight, more preferably from 0.1 to 1 parts by weight, per 100 parts by weight of PVC.

### Hydrates and oxides of alkali and alkaline-earth metals

Of the hydrates and oxides of alkali and alkaline-earth metals, optionally present in the composition of the invention, the following are preferred:
lithium oxide, sodium oxide, potassium oxide, magnesium oxide, calcium oxide and lithium hydroxide, sodium hydroxide, potassium hydroxide, magnesium hydroxide, calcium hydroxide.

The hydrates and oxides of alkali and alkaline-earth metals, if present, are preferably in an amount within the range from 0.1 to 3 parts by weight, more preferably from 0.2 to 1 parts by weight, per 100 parts by weight of polymer.

### Phosphites

The phosphites, optionally present in the composition of the invention, are preferably organic phosphites of general formula P(OR)₃, wherein the radicals R are identical or different and can be C₆-C₁₈ alkyl, C₆-C₁₈ alkenyl, C₅-C₇ cycloalkyl. Also included as preferred in the invention are acid phosphites of general formula P(OH)R₂, wherein the radicals R are identical or different and chosen from C₆-C₁₈ alkyl, C₆-C₁₈ alkenyl, phenyl, mono- or di-alkylphenyl, or C₅-C₇ cycloalkyl. Phosphites with the following general formula can also be present in the composition of the invention: 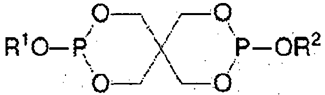 wherein R¹ and R² are identical or different and are C₆-C₁₈ alkyl, C₆-C₁₈ alkenyl, phenyl, mono- or di-alkylphenyl, or C₅-C₇ cycloalkyl. Preferred among these latter phosphites are those wherein R¹, R² = stearyl or

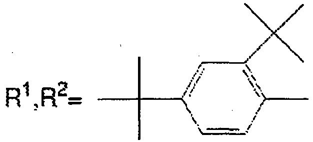

Phosphites with the following general formula can also be present:

(R¹O)₂-PO-R²-OP-(OR³)₂

wherein R¹ and R³ are identical or different and are C₆-C₁₈ alkyl, C₆-C₁₈ alkenyl, phenyl, mono- or di-alkylphenyl, or C₅-C₇ cycloalkyl, R² is alkyl, alkyloxy, aryl or arylalkyl.

Each C₆-C₁₈ alkyl substituent present is, for example, n-hexyl, n-octyl, n-nonyl, decyl, dodecyl, tetradecyl, hexadecyl or octadecyl. Groups having from 8 to 18 carbon atoms are preferred.

The preferred phosphites in the present invention include:
tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropyleneglycol diphosphite, 4,4' isopropylidenediphenol tetra(C₁₂₋₁₅ alcohol)phosphite, bis(2,4-di-t-butylphenyl)pentaerythritol diphosphite, distearyl pentaerythritol diphosphite.

The phosphites, if present, are preferably in an amount within the range from 0.1 to 2 parts by weight, more preferably from 0.2 to 0.5 parts by weight, per 100 parts by weight of polymer.

The composition for stabilizing the halogen-containing polymers of the invention when added to the halogen-containing polymer provides the resultant halogenated resin with excellent thermal stability properties, in particular an excellent long-term stability, and at the same time an excellent initial colour and good retention thereof in the final halogenated resin.

The invention therefore also concerns a halogenated resin in rigid formulation comprising a halogen-containing polymer and the above described stabilizer composition.

Alternatively, the invention therefore also concerns a halogenated resin in plasticized or semi-rigid formulation comprising a halogen-containing polymer and the above described stabilizer composition.

In a first preferred embodiment of the invention, the halogen-containing polymer is polyvinyl chloride PVC, and is more preferably polyvinyl chloride in plasticized form. In a more preferred embodiment of the invention, the polyvinyl chloride (PVC) in plasticized formulation is stabilized with the stabilizer composition of the invention which comprises the diamine as in formula I, and a perchlorate salt and one or more stabilizer compounds. Even more preferably, in said embodiment the perchlorate salt is sodium perchlorate.

Preferably, the diamine a) of the stabilizer composition is in an amount of 0.01 to 10 parts by weight, per 100 parts by weight of the halogen-containing polymer. More preferably, the diamine a) is in an amount of 0.01 to 5 parts by weight, per 100 parts by weight of the halogen-containing polymer.

In a preferred embodiment, the diamine a) is in an amount of 0.1 to 1 parts by weight, per 100 parts by weight of the halogen-containing polymer.

Preferably, in the halogenated resin, the compound b) of the stabilizer composition is M(ClO₄)ₖ and is in an amount of 0.001 to 5 parts by weight, per 100 parts by weight of the halogen-containing polymer.

More preferably, M(ClO₄)ₖ is in an amount of 0.001 to 2.5 parts by weight, per 100 parts by weight of the halogen-containing polymer.

In a preferred embodiment, M(ClO₄)ₖ is in an amount of 0.01 to 0.5 parts by weight, per 100 parts by weight of the halogen-containing polymer.

The halogen-containing polymer can be used to obtain plasticized halogenated resins. For this purpose, the halogen-containing polymer, preferably polyvinyl chloride, can contain added plasticizer substances.

Examples of preferred plasticizer substances, in the case of polyvinyl chloride, are esters of C₄-C₂₀ alcohols such as adipates, phthalates, trimellitates, azelates, sebacates, benzoates, phosphates, epoxidized compounds, such as epoxidized soya bean oil, polymeric plasticizers such as polyesters, polyadipates, polyphosphates and the like. The plasticizer amount varies widely according to the final use of the plasticized resin, said amount being preferably within the range from 5 to 120 parts by weight per 100 parts by weight of polyvinyl chloride (PVC), more preferably from 20 to 70 parts by weight per 100 parts by weight of PVC. The halogen-containing polymer can be advantageously mixed with other ingredients such as dyes, pigments, flame retardants, lubricants, light and ultraviolet radiation stabilizers, fluorescent whitening agents, fillers, gelling agents, antistatic agents, anti-fogging agents, expanders and other additives to prevent, mask or reduce deterioration caused by heating, ageing and exposure to light. Some embodiments of the invention follow, with examples evaluating the benefits deriving from the stabilizer composition of the invention, provided as non-limiting examples of the invention.

### EXAMPLES

Some stabilizer compositions of the invention were prepared and added to polyvinyl chloride and additives for the preparation of polyvinyl chloride resins in plasticized formulation, and then subjected to static thermal stability tests.

### Example 1

### Preparation of composition 1 of the invention

18.5 g of a 60% aqueous solution of sodium perchlorate were homogeneously dispersed in 44.5 g of N,N',N'-tris-(2-hydroxyethyl)-N-tallow-alkyl-1,3-diaminopropane at room temperature.

### Example 2

### Preparation of composition 2 of the invention

15 g of a 60% aqueous solution of sodium perchlorate were homogeneously dispersed in 36 g of N,N',N'-polyoxyethylene(15)-N-tallow-alkyl-1,3-diaminopropane at room temperature.

### Example 3

### Preparation of composition 3 of the invention

15 g of a 60% aqueous solution of sodium perchlorate were homogeneously dispersed in 36 g of N,N',N'-tris-(2-hydroxyethyl)-N-tallow-alkyl-1,3-diaminopropane at room temperature.

### Examples evaluating the composition of the invention

Final formulations of plasticized PVC containing the stabilizer compositions of examples 1, 2, 3 were obtained with the ingredients indicated in Tables 1 and 3, and were then spread onto a support and baked in a temperature-controlled oven at 190 °C for 2 minutes.

### Static thermal stability tests

The static thermal stability of the PVC compositions stabilized with the products of the invention was measured by means of static thermal stability tests. Rectangular test samples (1 x 24 cm) were cut from each sheet of thickness 0.1-0.3 mm. The samples were then fixed on the sliding trolley of a Werner Mathis dynamic temperature-controlled oven.

The evaluation consisted of subjecting each sheet with the tested formulations to 180°C for a total test duration of 90 minutes. Static thermal stability was measured from the time at which the mixture reached burning point; the longer this time period, the better the stabilizer performance.

### Example 4

The ingredients in the amounts indicated in Table 1 were homogeneously mixed for the preparation of the plasticized PVC formulation. The ingredient amounts in Table 1 are expressed in parts by weight per 100 parts by weight of PVC (phr). Formulations 1 and 3 were for comparison and formulations 2 and 4 contained the stabilizer composition of example 1.

**Table 1: Ingredients of Formulations 1, 2, 3 and 4**

| | Formulation 1(comparative) | Formulation 2 | Formulation 3 (comparative) | Formulation 4 |
|---|---|---|---|---|
| *Ingredients* | | | | |
| PVC Solvin 373 MH | 100 | 100 | 100 | 100 |
| DIUP* | 65 | 65 | 65 | 65 |
| ESBO** | 3 | 3 | 3 | 3 |
| Sodium perchlorate 60% | 0.37 | 0.37 | 0.49 | 0.49 |
| Ethomeen 012*** | 0.89 | | 1.18 | |
| Stabilizer composition Example 1 | | 0.89 | | 1.67 |
| | | | | |
| * diisoundecylphthalate | | | | |
| ** epoxidized soya bean oil | | | | |
| *** N-bis-(2-hydroxyethyl)oleylamine | | | | |

The sample sheets of Formulations 1, 2, 3 and 4 were subjected to static stability tests at 180°C for a total test duration of 90 minutes. The samples were fixed onto the sliding trolley of a Werner Mathis dynamic oven temperature-controlled at 180 °C and then heated. The trolley emerged from the oven at a rate of 0.5 cm every 2 minutes.

**Table 2: Evaluation of formulations 1, 2, 3 and 4**

| | Formulation 1 | Formulation 2 | Formulation 3 | Formulation 4 |
|---|---|---|---|---|
| burning point (minutes) | 50 | 80 | 55 | 90 |

The burning times of formulations 2 and 4, i.e. those of the invention, were significantly greater than those obtained when using an ethoxylated amine combined with perchlorate, i.e. formulations 1 and 3.

### Example 5

The ingredients in the amounts shown in Table 3 were homogeneously mixed for the preparation of the stabilized plasticized PVC formulation of example 4. The ingredient amounts in Table 3 are expressed in parts by weight per 100 parts by weight of PVC (phr). Formulation 5 was for comparison and formulations 6 and 7 contained the compositions of example 2 and 3 of the invention respectively.

**Table 3: Ingredients of Formulations 5, 6 and 7**

| | Formulation 5 (comparative) | Formulation 6 | Formulation 7 |
|---|---|---|---|
| *Ingredients* | | | |
| PVC Solvin 373 MH | 100 | 100 | 100 |
| DIUP* | 65 | 65 | 65 |
| ESBO** | 3 | 3 | 3 |
| Sodium perchlorate 60% | 0.3 | | |
| Ethomeen 012*** | 0.72 | | |
| Stabilizer composition example 2 | | 1.02 | |
| Stabilizer composition example 3 | | | 1.02 |
| | | | |
| * diisoundecylphthalate | | | |
| ** epoxidized soya bean oil | | | |
| ***N-bis-(2-hydroxyethyl)oleylamine | | | |

The samples sheets of formulations 5, 6 and 7 were subjected to static stability tests at 180°C for a total test duration of 90 minutes. The samples were fixed onto the sliding trolley of a Werner Mathis dynamic oven temperature-controlled at 180°C and then heated. The trolley emerged from the oven at a rate of 0.5 cm every 2 minutes.

**Table 4: Evaluation of Formulations 5, 6 and 7**

| | Formulation 5 | Formulation 6 | Formulation 7 |
|---|---|---|---|
| Burning point | 36 | 46 | 68 |

Formulations 6 and 7 of the invention had higher burning points than the comparison formulation 5 thus showing them to be better stabilizer compositions. The greater stability attained by formulation 7 relative to 6 was also confirmed.

## Claims

1. A composition for stabilizing halogen-containing polymers comprising:
a) at least one diamine of formula I 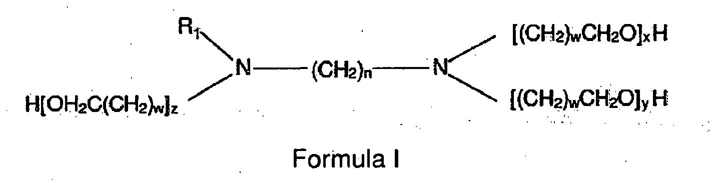 wherein
n is an integer from 3 to 4,
x, y, z are independently of each other an integer from 1 to 20,
w is an integer from 1 to 2,
R¹ is a C₈-C₂₀ hydrocarbon residue of a compound selected from the group consisting of tallow, cottonseed oil, soya bean oil, and coconut oil; and
b) at least one compound selected from the group consisting of M(ClO₄)ₖ and (CF₃SO₃)ₙM, wherein M is H⁺, Li⁺, Na⁺, K⁺, Mg²⁺, Ca²⁺, Ba²⁺, Zn²⁺, Al³⁺ or NH₄⁺, and k and n are 1, 2 or 3 depending on the valency of M.

2. The composition according to claim 1, wherein R¹ is a C₈-C₂₀ hydrocarbon residue of tallow or coconut oil.

3. The composition according to claim 2, wherein the R¹ is a C₈-C₂₀ alkyl residue selected from the group consisting of C₈-C₂₀ coco-alkyl and C₈-C₂₀ tallow-alkyl.

4. The composition according to any one of claims 1 to 3, wherein the diamine a) is NN',N,'-tris(3-hydroxypropyl)-N-coco-alkyl-1,3-propanediamine, N,N,N'-tris(2-hydroxyethyl)-N'-C₁₂₋₁₈ alkyl-1,3-propanediamine, N,N',N'-tris-(2-hydroxyethyl)-N-tallow-alkyl-1,3-propanediamine, N,N',N'-polyoxyethylene(15)-N-tallow-alkyl-1,3-propanediamine, or N,N',N'-tris(2-hydroxyethyl)-N-coco-alkyl-1,3-propanediamine.

5. The composition according to any one of claims 1 to 4, wherein the weight ratio between the diamine a) and compound b) is of 65:35 to 98:2.

6. The composition according to claim 5, wherein the weight ratio between the diamine a) and compound b) is of 70:30 to 95:5.

7. The composition according to any one of claims 1 to 6, wherein M of compound b) is Li⁺, Na⁺, K⁺, Mg²⁺, Ca²⁺ or Zn²⁺.

8. The composition according to claim 7, wherein M is Na⁺, K⁺ or Ca²⁺.

9. The composition according to claim 8, wherein M is Na⁺.

10. The composition according to any one of claims 1 to 9, wherein the compound b) is M(ClO₄)ₖ and M is H, Li⁺, Na⁺, K⁺, Mg²⁺, Ca²⁺, or Zn²⁺.

11. The composition according to claim 10, wherein M is Na⁺.

12. The composition according to claim 10 or claim 11, wherein the compound b) is supported on PVC, calcium silicate, zeolites or hydrotalcites or bound to a hydrotalcite by means of chemical reaction.

13. The composition according to any one of claims 1 to 9, wherein the compound b) is (CF₃SO₃)nM.

14. The composition according to any one of claims 1 to 13, further comprising one or more stabilizers and co-stabilizers, selected from the group consisting of metal soaps, organotin compounds, antioxidants, organic co-stabilizers selected from β-diketones, dihydropyridines, polydihydropyridines and uracil derivatives, alkanolamines, zeolites and hydrotalcites, polyols, hydrates and oxides of alkali and alkaline-earth metals, and organic phosphites.

15. A halogenated resin composition in rigid formulation comprising a halogen-containing polymer and a stabilizer composition according to any one of claims 1 to 14.

16. A halogenated resin composition in plasticized or semi-rigid formulation comprising a halogen-containing polymer, at least one plasticizer and a stabilizer composition according to any one of claims 1 to 14.

17. The halogenated resin according to claim 15 or claim 16, wherein the halogen-containing polymer is polyvinyl chloride (PVC).

18. The halogenated resin according to any one of claims 15 to 17, wherein the diamine a) of the stabilizer composition is in an amount of 0.01 to 10 parts by weight, per 100 parts by weight of the halogen-containing polymer.

19. The halogenated resin according to claim 18, wherein the diamine a) is in an amount of 0.01 to 5 parts by weight, per 100 parts by weight of the halogen-containing polymer.

20. The halogenated resin according to any one of claims 15 to 19, wherein the compound b) of the stabilizer composition is M(ClO₄)ₖ and is in an amount of 0.001 to 5 parts by weight, per 100 parts by weight of the halogen-containing polymer.

21. The halogenated resin according to claim 20, wherein M(ClO₄)ₖ is in an amount of 0.001 to 2.5 parts by weight, per 100 parts by weight of the halogen-containing polymer.

22. The halogenated resin according to any one of claims 15 to 21, further comprising additives selected from the group consisting of dyes, pigments, flame retardants, internal and/or external lubricants, impact modifiers, processing adjuvants, light and ultraviolet radiation stabilizers, fluorescent whitening agents, fillers, gelling agents, antistatic agents, anti-fogging agents and expanders.

## Patentansprüche

1. Zusammensetzung zum Stabilisieren von Halogen enthaltenden Polymeren umfassend:
a) wenigstens ein Diamin gemäß der Formel I 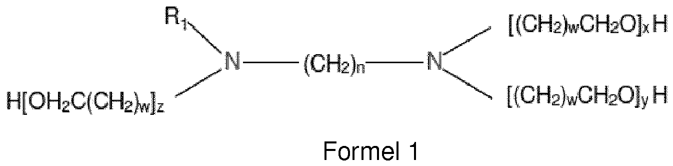 worin
n eine ganze Zahl zwischen 3 und 4 ist,
x, y, z jeweils unabhängig voneinander eine ganze Zahl zwischen 1 und 20 sind,
w eine ganze Zahl von 1 bis 2 ist,
R¹ ein C₈-C₂₀-Kohlenwasserstoffrest einer Verbindung ist, welche aus der Gruppe ausgewählt ist, welche aus Talg, Baumwollsamenöl, Sojabohnenöl und Kokosnussöl besteht, sowie
b) wenigstens eine Verbindung ausgewählt aus der Gruppe bestehend aus M(ClO₄)ₖ und (CF₃SO₃)ₙM, worin M H⁺, Li⁺, Na⁺,K⁺, Mg²⁺, Ca2+, Ba²⁺, Zn²⁺, Al³⁺ oder NH₄⁺ ist und k sowie n abhängig von der Valenz von M 1, 2 oder 3 sind.

2. Zusammensetzung nach Anspruch 1, wobei R¹ ein C₈-C₂₀-Kohlenwasserstoffrest von Talg oder Kokosnussöl ist.

3. Zusammensetzung nach Anspruch 2, wobei R¹ ein C₈-C₂₀-Alkylrest ausgewählt aus der Gruppe bestehend aus C₈-C₂₀-Kokosalkyl und C₈-C₂₀-Talgalkyl ist.

4. Zusammensetzung nach einem der Ansprüche 1 bis 3, wobei das Diamin a) N,N',N'-Tris(3-hydroxypropyl)-N-kokos-alkyl-1,3-propandiamin, N,N,N'-Tris(2-hydroxyethyl)-N'-C₁₂₋₁₈-alkyl-1,3-propandiamin, N,N',N'-Tris(2-hydroxyethyl)-N-talg-alkyl-1,3-propandiamin, N,N',N'-Polyoxyethylene(15)-N-talg-alkyl-1,3-propandiamin oder N,N',N'-Tris(2-hydroxyethyl)-N-kokos-alkyl-1,3-propandiamin ist.

5. Zusammensetzung nach einem der Ansprüche 1 bis 4, wobei das Gewichtsverhältnis zwischen dem Diamin a) und der Verbindung b) 65:35 bis 98:2 beträgt.

6. Zusammensetzung nach Anspruch 5, wobei das Gewichtsverhältnis zwischen dem Diamin a) und der Verbindung b) 70:30 bis 95:5 beträgt.

7. Zusammensetzung nach einem der Ansprüche 1 bis 6, wobei M der Verbindung b) Li⁺, Na⁺, K⁺, Mg²⁺, Ca²⁺ oder Zn²⁺ ist.

8. Zusammensetzung nach Anspruch 7, wobei M Na⁺, K⁺ oder Ca²⁺ ist.

9. Zusammensetzung nach Anspruch 8, wobei M Na⁺ ist.

10. Zusammensetzung nach einem der Ansprüche 1 bis 9, wobei die Verbindung b) M(ClO₄)ₖ ist und M H, Li⁺, Na⁺, K⁺, Mg²⁺, Ca²⁺ oder Zn²⁺ ist.

11. Zusammensetzung nach Anspruch 10, wobei M Na⁺ ist.

12. Zusammensetzung nach Anspruch 10 oder 11, wobei die Verbindung b) auf PVC, Calciumsilikat, Zeoliten oder Hydrotalciten getragen oder an ein Hydrotalcit mittels einer chemischen Reaktion gebunden ist.

13. Zusammensetzung nach einem der Ansprüche 1 bis 9, wobei die Verbindung b) (CF₃SO₃)ₙM ist.

14. Zusammensetzung nach einem der Ansprüche 1 bis 13, welche des Weiteren ein oder mehrere Stabilisatoren und Co-Stabilisatoren enthält, welche aus der Gruppe ausgewählt sind, welche aus Metallseifen, Organozinnverbindungen, Antioxidationsmitteln, organischen Co-Stabilisatoren ausgewählt aus β-Diketonen, Dihydropyridinen, Polydihydropyridinen und Uracilderivativen, Alkanolaminen, Zeoliten und Hydrotalciten, Polyolen, Hydraten und Oxiden von Alkali- und Erdalkalimetallen und organischen Phosphiten besteht.

15. Halogenierte Harzzusammensetzung in steifer Formulierung enthaltend ein Halogen enthaltendes Polymer und eine Stabilisierungszusammensetzung nach einem der Ansprüche 1 bis 14.

16. Halogenierte Harzzusammensetzung in plastifizierter oder halbsteifer Formulierung enthaltend ein Halogen enthaltendes Polymer, wenigstens einen Weichmacher und eine Stabilisierungszusammensetzung nach einem der Ansprüche 1 bis 14.

17. Halogeniertes Harz nach Anspruch 15 oder 16, wobei das Halogen enthaltende Polymer Polyvinylchlorid (PVC) ist.

18. Halogeniertes Harz nach einem der Ansprüche 15 bis 17, wobei das Diamin a) der Stabilisierungszusammensetzung in einer Menge von 0,01 bis 10 Gewichtsteilen bezogen auf 100 Gewichtsteile des Halogen enthaltenden Polymer enthalten ist.

19. Halogeniertes Harz nach Anspruch 18, wobei das Diamin a) in einer Menge von 0,01 bis 5 Gewichtsteilen bezogen auf 100 Gewichtsteile des Halogen enthaltenden Polymers enthalten ist.

20. Halogeniertes Harz nach einem der Ansprüche 15 bis 19, wobei die Verbindung b) der Stabilisierungszusammensetzung M(ClO₄)ₖ ist und in einer Menge von 0,001 bis 5 Gewichtsteilen bezogen auf 100 Gewichtsteile des Halogen enthaltenden Polymers enthalten ist.

21. Halogeniertes Harz nach Anspruch 20, wobei M(ClO₄)ₖ in einer Menge von 0,001 bis 2,5 Gewichtsteilen bezogen auf 100 Gewichtsteile des Halogen enthaltenden Polymers enthalten ist.

22. Halogeniertes Harz nach einem der Ansprüche 15 bis 21, welches des Weiteren Additive enthält, welche aus der Gruppe ausgewählt sind, welche aus Farbstoffen, Pigmenten, Flammschutzmitteln, inneren und/oder äußeren Schmierstoffen, Aufprallmodifizierungsmitteln, Verarbeitungshilfsmitteln, leichten und ultravioletten Strahlungsstabilisatoren, fluoreszenten Weißmitteln, Füllstoffen, Geliermitteln, antistatischen Mitteln, Beschlagschutzmitteln und Expandern besteht.

## Revendications

1. Composition pour stabiliser des polymères contenant un halogène, comprenant :
a) au moins une diamine de formule I 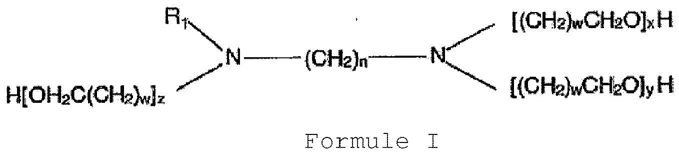 dans laquelle
n est un nombre entier de 3 à 4,
x, y, z sont indépendamment les uns des autres un nombre entier de 1 à 20,
w est un nombre entier de 1 à 2,
R¹ est un résidu hydrocarbure en C₈-C₂₀ d'un composé sélectionné dans le groupe constitué de suif, d'huile de coton, d'huile de soja, et d'huile de coco ; et
b) au moins un composé sélectionné dans le groupe constitué de M(ClO₄)k et (CF₃SO₃)ₙM, dans laquelle M est H⁺, Li⁺, Na `, K⁺, Mg²⁺, Ca²⁺, Ba²⁺, Zn²⁺, Al³⁺ ou NH₄⁺, et k et n valent 1, 2 ou 3 en fonction de la valence de M.

2. Composition selon la revendication 1, dans laquelle R¹ est un résidu hydrocarbure en C₈-C₂₀ de suif ou d'huile de coco.

3. Composition selon la revendication 2, dans laquelle R¹ est un résidu alkyle en C₈-C₂₀ sélectionné dans le groupe constitué d'un résidu alkyle de coco en C₈-C₂₀ et d'un résidu alkyle de suif en C₈-C₂₀.

4. Composition selon l'une quelconque des revendications 1 à 3, dans laquelle la diamine a) est la N,N',N'-tris(3-hydroxypropyl)-N-alkyl de coco-1,3-propanediamine, la N,N,N'-tris(2-hydroxyéthyl)-N'-alkyl en C₁₂-₁₈-1, 3 -propanediamine, la N,N',N'-tris-(2-hydroxyéthyl)-N-alkyl de suif-1,3-propanediamine, la N,N',N'-polyoxyéthylène(15)-N-alkyl de suif-1,3-propanediamine, ou la N,N',N'-tris(2-hydroxyéthyl)-N-alkyl de coco-1,3-propanediamine.

5. Composition selon l'une quelconque des revendications 1 à 4, dans laquelle le rapport en poids de la diamine a) sur le composé b) est de 65/35 à 98/2.

6. Composition selon la revendication 5, dans laquelle le rapport en poids de la diamine a) sur le composé b) est de 70/30 à 95/5.

7. Composition selon l'une quelconque des revendications 1 à 6, dans laquelle M du composé b) est Li⁺, Na⁺, K⁺, Mg²⁺, Ca²⁺ ou Zn²⁺.

8. Composition selon la revendication 7, dans laquelle M est Na⁺, K⁺ ou Ca²⁺.

9. Composition selon la revendication 8, dans laquelle M est Na⁺.

10. Composition selon l'une quelconque des revendications 1 à 9, dans laquelle le composé b) est M(ClO₄)ₖ et M est H, Li⁺, Na⁺, K⁺, Mg²⁺, Ca²⁺, ou Zn²⁺.

11. Composition selon la revendication 10, dans laquelle M est Na⁺.

12. Composition selon la revendication 10 ou la revendication 11, dans laquelle le composé b) est supporté sur du PVC, du silicate de calcium, des zéolites ou des hydrotalcites ou lié à une hydrotalcite au moyen d'une réaction chimique.

13. Composition selon l'une quelconque des revendications 1 à 9, dans laquelle le composé b) est (CF₃SO₃)ₙM.

14. Composition selon l'une quelconque des revendications 1 à 13, comprenant en outre un ou plusieurs agents de stabilisation et de co-stabilisation, sélectionnés dans le groupe constitué de savons métalliques, de composés organostaniques, d'antioxydants, d'agents de co-stabilisation organiques sélectionnés parmi les β-dicétones, les dihydropyridines, les polydihydropyridines et les dérivés d'uracile, d'alcanolamines, de zéolites et d'hydrotalcites, de polyols, d'hydrates et d'oxydes de métaux alcalins et alcalino-terreux, et de phosphites organiques.

15. Composition de résine halogénée dans une formulation rigide comprenant un polymère contenant un halogène et une composition de stabilisation selon l'une quelconque des revendications 1 à 14.

16. Composition de résine halogénée dans une formulation plastifiée ou semi-rigide comprenant un polymère contenant un halogène, au moins un plastifiant et une composition de stabilisation selon l'une quelconque des revendications 1 à 14.

17. Composition de résine halogénée selon la revendication 15 ou la revendication 16, dans laquelle le polymère contenant un halogène est le chlorure de polyinyle (PVC).

18. Composition de résine halogénée selon l'une quelconque des revendications 15 à 17, dans laquelle la diamine a) de la composition de stabilisation est présente en une quantité de 0,01 à 10 parties en poids, pour 100 parties en poids du polymère contenant un halogène.

19. Résine halogénée selon la revendication 18, dans laquelle la diamine a) est présente en une quantité de 0,01 à 5 parties en poids, pour 100 parties en poids du polymère contenant un halogène.

20. Composition de résine halogénée selon l'une quelconque des revendications 15 à 19, dans laquelle le composé b) de la composition de stabilisation est M(ClO₄)k et est présent en une quantité de 0,001 à 5 parties en poids, pour 100 parties en poids du polymère contenant un halogène.

21. Résine halogénée selon la revendication 20, dans laquelle le M(ClO₄)ₖ est présent en une quantité de 0,001 à 2,5 parties en poids, pour 100 parties en poids du polymère contenant un halogène.

22. Composition de résine halogénée selon l'une quelconque des revendications 15 à 21, comprenant en outre des additifs sélectionnés dans le groupe constitué de colorants, de pigments, d'agents ignifuges, de lubrifiants internes et/ou externes, de modificateurs d'impact, d'adjuvants de traitement, d'agents de stabilisation à la lumière et aux rayons ultraviolets, d'agents de blanchiment fluorescents, de charges, d'agents de gélification, d'agents antistatiques, d'agents anti-buée et d'expanseurs.
